# EUROPEAN PATENT APPLICATION

(11) **EP 4 617 293 A1**
(43) Date of publication of application: **17.09.2025**
(21) Application number: 24163662.0
(22) Date of filing: 14.03.2024
(51) Int. Cl.: C08F 110/06

(54) **PHTALATE-FREE ZIEGLER-NATTA CATALYSTS USING MIXED INTERNAL DONORS TO ADJUST ACHIEVABLE XS RANGE**

(71) Applicant: Lummus Novolen Technology GmbH, 68165 Mannheim (DE)
(72) Inventor: Günther, Benjamin Andreas Rolf, Mannheim (DE); Günther, Johannes Sebastian, Mannheim (DE)
(74) Representative: Osha BWB

(57) **Abstract**

Embodiments disclosed herein relate to a pre-catalyst, a catalyst and a process for polymerizing propylene. The phthalate-free Ziegler-Natta pre-catalyst comprises a Mg-based support; a transition metal selected from Groups 4 to 8 of the periodic table; a first internal electron donor (ID1) consisting of at least one diester; a second internal electron donor (ID2) consisting of at least one 1,3-diether. The at least one diester comprises one or more maleates and/or substituted maleates. The at least one 1,3-diether comprises one or more diethers represented by the general structure (I).

## Description

### TECHNICAL FIELD

The present disclosure relates to a phthalate-free pre-catalyst, as well as to a process for producing such a pre-catalyst. The present disclosure further relates to a phthalate-free Ziegler-Natta catalyst comprising such a pre-catalyst, for the production of homopolymers or copolymers of polypropylene, and to a process for polymerizing propylene.

### DESCRIPTION OF THE RELATED ART

Ziegler-Natta catalysts are generally composed of a catalyst support material and a transition metal component. The transition metal component is typically a substituted group 4-8 transition metal, with titanium, zirconium, chromium or vanadium being commonly used. The transition metal is often provided as a metal halide, such as TiCl₄. One well known support material used in Ziegler-Natta catalysts is MgCl₂. The MgCl₂ material may be complexed with ethanol (EtOH). In preparing the catalyst, most or all of the EtOH reacts with the transition metal halide, such as TiCl₄. Examples of catalysts preparations are described in US 4829034 A, US 6020279 A, US 7015170 B2, US 10836846 B2, or US 10287371 B2.

Ziegler-Natta catalysts are used to effectively promote the high yield polymerization of olefins. In the polymerization of olefins, the catalyst is often used in combination with an organo-aluminum cocatalyst.

When used to catalyze the polymerization of propylene, a third component, an electron donor, is often used in the catalyst to control the stereoregularity of the polymer. The electron donor may be incorporated into the catalyst during its synthesis (an internal donor, ID), or can be added to the polymerization reactor during the polymerization reaction (an external donor, ED). In some polymerization processes, both an internal donor and an external donor may be used. Various aromatic esters, diethers, succinates, alkoxysilanes and hindered amines are examples of compounds that have been used as internal and/or external donors.

An important parameter of the resulting polymers, is the Xylene solubles (XS) or Xylene Soluble content, which is an indicator of the isotacticity of a polymer. By changing this parameter, the crystalline structure and the crystallization rate of a polymer is dramatically influenced, which has impact on the usability of a certain polymer for a given application, as stiffness and toughness of polymer resins as well as their behavior during processing, are widely dominated by the XS content.

The range of such XS content is typically between about 1 and 6 wt% and thus relates to the designated application field for the polymer. As an example, in the case of polymers used in the field of film applications, such as biaxially oriented films (BOPP), the XS content should be high (3 wt% up to 6 wt%). In the case of certain injection molding applications, the XS content of homopolymer resins or of the homopolymer part of heterophasic impact co-polymers should be as low as possible, preferably lower than 1.5 wt%, most preferably 1 wt% or even lower. Other important grades require XS values between 2 wt% and 3 wt%, such as for use in applications like fiber, raffia, thermoforming and thin wall injection molding.

External donors such as alkoxysilanes are broadly used to regulate the stereospecificity of the polymer and thus the amount of the XS content generated in the polymerization. In the presence of sufficient amounts of external donor, any catalyst system features a specific XS plateau, *e.g.,* a XS of 1 wt%. The XS can thus only be varied by depleting the system of the external donor. However, the XS content rises steeply when decreasing the amount of external donor in the polymerization, and therefore adjustment on the industrial scale is a considerable concern. For example, only a slight variation in external donor concentration can result in an XS value of 10 wt% instead of 4 wt%. This can in turn lead to reactor shut down which in terms of operability is a catastrophe. As worst-case scenario, a typical catalyst containing *phthalate* can produce polymer with XS values higher than 20 wt% in the absence of external donor.

Due to health, environment and safety concerns in connection with the use of phthalate-containing Ziegler-Natta catalysts for the production of polymers with potential skin or food contact, a driver to develop new Ziegler-Natta catalysts is the need to provide non-phthalate catalyst versions that produce polymers with an identical or at least very similar performance profile as the currently broadly used phthalate-containing Ziegler-Natta catalysts.

Known alternatives are versions where various malonates, succinates or diether compounds are used instead of phthalates. Unfortunately, the use of such alternative internal donors results in polymers with fully different performance profiles, in terms of, for example, XS, polydispersity, or MFR ranges. Yet, as accustomed to processing polymers which are produced with phthalate-based Ziegler-Natta catalysts, the converters insist on xylene soluble contents typically produced by such catalysts and expect that phthalate-free Ziegler-Natta catalysts deliver a similar XS range.

State of the art diether-based catalysts deliver polymers for which the XS content is high, and when external donors like silanes are used to reduce the amount of xylene solubles, the technically possible reduction is low, and as a side effect the catalyst productivity drops dramatically. As a typical example, a diether catalyst without addition of an external donor produces a polymer with a xylene soluble content of 4 wt%. Using the same diether catalyst together with an external donor, the xylene soluble content in the polymer can be reduced to about 2 wt%, but at the same time the catalyst productivity is reduced from 30 kg polymer / g catalyst to 15 kg polymer / g catalyst. Xylene solubles of less than 2 wt% and above 4 wt% are out of reach. As a consequence, current diether catalysts are niche catalysts and are used for the production of specialty polymers like fiber grades where the combination of a narrow molecular weight distribution in combination with a fixed amount of xylene solubles of about 2.5 wt% is of certain value.

Phthalate-like internal donors such as dialkylcitraconates cannot be operated in the absence of external donor and as such are prone to XS excursions and lump formation during external donor dosing malfunction. Moreover, activities at high XS products are significantly reduced.

Accordingly, such alternative catalysts aiming at substituting phthalates can be used for specific applications only, but cannot be used as universal catalysts covering the whole XS range typical of the numerous grades manufactured by a polymer producer.

Thus, prior art phthalate-free catalysts may be unsuitable and/or unreliable for industrial production. Due to catalyst transition, which is inherent to the use of multiple catalysts, they may substantially increase the cost of polypropylene.

Accordingly, within the context of Ziegler-Natta catalyzed processes for the production of polypropylene, there is a need for providing a single, phthalate-free catalyst system that would improve the known capability of achieving a broad XS range, such as *e.g.,* [1 - 6 wt%], or a very broad MFR range, *e.g.*, [1-100 g/10min], without activity losses and with excellent operational stability.

### SUMMARY OF THE DISCLOSURE

Embodiments disclosed herein provide phthalate-free Ziegler-Natta pre-catalysts, Ziegler-Natta catalysts, as well as catalyzed processes for the production of polypropylenes, that overcome the above shortcomings.

Very advantageously, the pre-catalysts, catalysts and processes according to one or more embodiments disclosed herein may provide a sound alternative to phthalate-based Ziegler-Natta catalysts, by covering the full XS range in a predictable manner, with a single phthalate-free catalyst and therefore without catalyst transition, which in turn allows for higher throughputs and worry-free production within the frame of olefin production in a commercial plant.

In one aspect, embodiments disclosed herein relate to a phthalate-free Ziegler-Natta pre-catalyst comprising a Mg-based support, a transition metal selected from Groups 4 to 8 of the periodic table, a first internal electron donor (ID 1) consisting of at least one diester, and a second internal electron donor (ID2) consisting of at least one 1,3-diether. The at least one diester comprises one or more maleates and/or substituted maleates. The at least one 1,3-diether comprises one or more diethers represented by the general structure (I):

R¹O - (C R⁵R⁶) - CR³R⁴ - (C R⁷R⁸) - OR² (I)

where R¹ and R² are identical or different and are selected from the group consisting of a saturated or unsaturated aliphatic group of from 1 to 20 carbon atoms or an aryl group of from 6 to 20 carbon atoms; R³ and R⁴ are identical or different and are each a hydrogen atom or a linear, cyclic or branched hydrocarbon group optionally containing one or more heteroatoms Si, B, Al, O, S, N or P, and optionally containing a halogen atom F, Cl or Br, and/or the two radicals R³ and R⁴ form a hydrocarbon ring system; R⁵, R⁶, R⁷ and R⁸ are identical or different and are each a hydrogen atom or a linear, cyclic or branched hydrocarbon group optionally containing one or more hetero atoms Si, B, Al, O, S, N or P, and optionally containing a halogen atom F, Cl or Br.

In a further aspect, embodiments disclosed herein relate to a process for producing a phthalate-free pre-catalyst as defined in the above aspect.

In a further aspect, embodiments disclosed herein relate to a phthalate-free Ziegler-Natta catalyst for the production of homopolymers or copolymers of polypropylene. The catalyst comprises the pre-catalyst as defined in the above aspect, a co-catalyst, and optionally one or more external electron donors (ED). The co-catalyst comprises an organo-aluminum compound selected from the group comprising alkylaluminum compounds, alkylaluminum halides, alkylaluminum hydrides, alkylaluminum sesquichlorides, and mixtures thereof. The optional one or more external electron donors (ED) are selected from the group comprising mono- and poly-functional carboxylic acids, carboxylic anhydrides, carboxylic esters, ketones, ethers, alcohols, lactones, organic phosphorus-containing compounds, organic silicon-containing compounds, and combinations thereof.

In a further aspect, embodiments disclosed herein relate to a process for polymerizing propylene, the process comprising contacting, in a polymerization reactor, propylene, and optionally one or more comonomers with the phthalate-free Ziegler-Natta pre-catalyst or catalyst as defined in the above aspects.

The pre-catalyst, catalyst and process according to the aspects described above may allow for the production of a broad portfolio of polypropylene polymers while circumventing the health, environment and safety concerns related to the use of phthalates. These results may be achieved, according to one or more embodiments disclosed herein, through a careful selection of the first and second internal electron donors which are combined in the pre-catalyst. Indeed, such a combination of ID1 and ID2 may offer the guarantee of the existence of an upper limit value for the XS content in a polymer formed for a set of predetermined polymerization conditions involving the pre-catalyst. The resulting predictability of the XS upper limit may in turn allow to avoid any XS excursion/runaway and the concomitant risk of lump formation in the polymerization reactor, thereby giving access to the full XS range in a predictable manner.

The above-described advantages may be obtained without harming the catalyst activity, and the properties of the resulting polymers may be improved or may at least be comparable to those provided by phthalate containing Ziegler-Natta catalysts. Among the benefits of the pre-catalysts, catalysts and polymerization processes of the present disclosure, embodiments disclosed herein may further allow to obtain, *inter alia*, broad MFR and molecular-weight-distribution (MWD) ranges, a broad polypropylene product slate, and an increased and steady productivity over a very broad product range.

Other aspects and advantages will be apparent from the following description and the appended claims, that define further embodiments of the pre-catalysts, catalysts and polymerization processes.

### DETAILED DESCRIPTION OF EMBODIMENTS

### PHTHALATE-FREE ZIEGLER-NATTA PRE-CATALYST

In one aspect, embodiments disclosed herein relate to a phthalate-free Ziegler-Natta pre-catalyst comprising a Mg-based support, a transition metal selected from Groups 4 to 8 of the periodic table, a first internal electron donor (ID1) consisting of at least one diester, and a second internal electron donor (ID2) consisting of at least one 1,3-diether. The at least one diester comprises one or more maleates and/or substituted maleates. The at least one 1,3-diether comprises one or more 1,3-diethers represented by the general structure (I):

R¹O - (C R⁵R⁶) - CR³R⁴ - (C R⁷R⁸) - OR² (I)

where R¹ and R² are identical or different and are selected from the group consisting of a saturated or unsaturated aliphatic group of from 1 to 20 carbon atoms or an aryl group of from 6 to 20 carbon atoms; R³ and R⁴ are identical or different and are each a hydrogen atom or a linear, cyclic or branched hydrocarbon group optionally containing one or more heteroatoms Si, B, Al, O, S, N or P, and optionally containing a halogen atom F, Cl or Br, and/or the two radicals R³ and R⁴ form a hydrocarbon ring system; R⁵, R⁶, R⁷ and R⁸ are identical or different and are each a hydrogen atom or a linear, cyclic or branched hydrocarbon group optionally containing one or more hetero atoms Si, B, Al, O, S, N or P, and optionally containing a halogen atom F, Cl or Br.

By "phthalate-free", it is meant that the pre-catalyst is substantially free of undesired phthalate, or does not contain any phthalate.

Such a combination, in the pre-catalyst as defined above, of the first internal donor, ID1, together with the second internal donor, ID2, contributes to achieving a broad XS range, and more specifically to offering the predictability of the upper XS threshold.

Without wishing to be bound by any theory, the inventors believe that during Ziegler-Natta catalyzed polymerization, the combination of these two types of internal donors behaves, schematically, as follows. In the presence of a cocatalyst and an external donor ED, the first internal donor ID1 (*i.e.*, the one or more diester compounds) may react with the co-catalyst and be replaced by the external donor ED on the Mg-based support, whereas the second internal donor ID2 (*i.e.*, the one or more diether compounds) remains intact. Resulting is a catalyst providing polypropylene with low XS. In contrast, in the presence of a cocatalyst and in the absence of ED, ID1 is removed without being replaced by any ED, leading to a catalyst providing polypropylene with high XS. By adjusting, for example, the ratio of ID1 to ID2, the high XS upper limit may thus be adjusted in a predictable way for a standard set of predetermined polymerization conditions.

The selected combination of features present in the pre-catalyst may thus allow to obtain the full range of XS values for polypropylenes and consequently the whole production portfolio, with a single catalyst, thereby avoiding catalyst transition in a polypropylene plant. Moreover, the approach described in the present disclosure is not detrimental to the catalyst's activity and thus represents a viable alternative to Ziegler-Natta phthalate-based catalysts.

As mentioned above, the second internal electron donor ID2 consists of at least one 1,3-diether, *i.e.*, one or more 1,3-diethers with different molecular structures. Preferred 1,3-diethers useful in embodiments herein may be represented by the structure (II):

R¹O - CH₂ - CR³R⁴ - CH₂ - OR² (II)

where R¹ and R² are the same or different and are selected from the group consisting of a saturated or unsaturated aliphatic group of from 1 to about 20 carbon atoms, more preferably an alkyl group of from 1 to about 10 carbon atoms, even more preferably an alkyl group of from 1 to 4 carbon atoms, ideally a methyl or ethyl group, most ideally a methyl group, R³ and R⁴ are identical or different and are each a linear, cyclic or branched hydrocarbon group, for example an alkyl group of from 1 to about 20 carbon atoms, an alkenyl group of from 2 to about 20 carbon atoms, an aryl group of from 6 to about 20 carbon atoms, an arylalkyl group of from 7 to about 40 carbon atoms, an alkylaryl group of from 7 to about 40 carbon atoms or an arylalkenyl group of from 8 to about 40 carbon atoms and may contain one or more hetero atoms like Si, B, Al, O, S, N or P, and/or may contain halogen atoms like F, Cl or Br, and/or the two radicals R³ and R⁴ may form a hydrocarbon ring system.

More preferably, 1,3-diethers useful in embodiments herein may be represented by the structure (III):

R¹O - CH₂ - CR³R⁴ - CH₂ - OR² (III)

wherein R¹ and R² are identical and are selected from the group consisting of an alkyl group of from 1 to about 10 carbon atoms, even more preferably an alkyl group of from 1 to 4 carbon atoms, ideally a methyl or ethyl group, most ideally a methyl group, R³ and R⁴ are identical or different and are each a linear, cyclic or branched hydrocarbon group, for example an alkyl group of from 1 to about 10 carbon atoms, an alkenyl group of from 2 to about 10 carbon atoms, an aryl group of from 6 to about 10 carbon atoms, an arylalkyl group of from 7 to about 40 carbon atoms, an alkylaryl group of from 7 to about 40 carbon atoms or an arylalkenyl group of from 8 to about 40 carbon atoms, and/or the two radicals R³ and R⁴ may form a hydrocarbon ring system, which may contain one or more hetero atoms like Si, O, S, N or P.

Examples of preferred 1,3-diethers include one or more of: 2,2 di-cyclopentyl-1,3-dimethoxypropane; 2,2 di-(cyclopentylmethyl)-1,3-dimethoxypropane; 2,2-di-cylohexyl-1,3-dimethoxypropane; 2,2-di-(cylohexylmethyl)-1,3-dimethoxypropane; 2,2- di-norbornyl-1,3-dimethoxypropane; 2,2-di-phenyl-1,3-dimethoxypropane; 2,2-di-phenylmethyl-1,3-dimethoxypropane; 2,2-di-n-propyl-1,3-dimethoxypropane; 2,2-di-isopropyl-1,3-dimethoxypropane; 2,2-di-n-butyl-1,3-dimethoxypropane; 2,2-di-secbutyl-1,3-dimethoxypropane; 2,2-di-isobutyl-1,3-dimethoxypropane; 2,2-di-n-pentyl-1,3-dimethoxypropane; 2,2-di-(2-pentyl)-1,3-dimethoxypropane; 2,2-di-(3-pentyl)-1,3-dimethoxypropane; 2,2-di-(methylbutyl)-1,3-dimethoxypropane; 2,2-di-(3-methylbut-2-yl)-1,3-dimethoxypropane; 2,2-di-isopentyl-1,3-dimethoxypropane; 2,2-di-n-hexyl-1,3-dimethoxypropane; 2,2-di-2-hexyl-1,3-dimethoxypropane; 2,2-di-3-hexyl-1,3-dimethoxypropane; 2,2-di-(2-methylpentyl)-1,3-dimethoxypropane; 2,2-di-(3-methylpentyl)-1,3-dimethoxypropane; 2,2-di-(4-methylpentyl)-1,3-dimethoxypropane; 2-tertbutyl-1,3-dimethoxypropane; 2-ethyl-2-tertbutyl-1,3-dimethoxypropane; 2-n-propyl-2-tertbutyl-1,3-dimethoxypropane; 2-n-butyl-2-tertbutyl-1,3-dimethoxypropane; 2-isobutyl-2-tertbutyl-1,3-dimethoxypropane; 2-n-pentyl-2-tertbutyl-1,3-dimethoxypropane; 2-isopentyl-2-tertbutyl-1,3-dimethoxypropane; 2-n-hexyl-2-tertbutyl-1,3-dimethoxypropane; 2-ethyl-2-isopropyl-1,3-dimethoxypropane; 2-n-propyl-2-isopropyl-1,3-dimethoxypropane; 2-n-butyl-2-isopropyl-1,3-dimethoxypropane; 2-secbutyl-2-isopropyl-1,3-dimethoxypropane; 2-isobutyl-2-isopropyl-1,3-dimethoxypropane; 2-n-pentyl-2-isopropyl-1,3-dimethoxypropane; 2-(2-pentyl)-2-isopropyl-1,3-dimethoxypropane; 2-(3-pentyl)-2-isopropyl-1,3-dimethoxypropane; 2-methylbutyl-2-isopropyl-1,3-dimethoxypropane; 2-(3-methylbut-2-yl)-2-isopropyl-1,3-dimethoxypropane; 2-isopentyl-2-isopropyl-1,3-dimethoxypropane; 2-n-hexyl-2-isopropyl-1,3-dimethoxypropane; 2-(2-hexyl)-2-isopropyl-1,3-dimethoxypropane; 2-(3-hexyl)-2-isopropyl-1,3-dimethoxypropane; 2-(2-methylpentyl)-2-isopropyl-1,3-dimethoxypropane; 2-(3-methylpentyl)-2-isopropyl-1,3-dimethoxypropane; 2-(4-methylpentyl)-2-isopropyl-1,3-dimethoxypropane; 2-ethyl-2-cyclopentyl-1,3-dimethoxypropane; 2-n-propyl-2-cyclopentyl-1,3-dimethoxypropane; 2-isopropyl-2-cyclopentyl-1,3-dimethoxypropane; 2-n-butyl-2-cyclopentyl-1,3 -dimethoxypropane; 2-isobutyl-2-cyclopentyl-1,3 -dimethoxypropane; 2-secbutyl-2-cyclopentyl-1,3 -dimethoxypropane; 2-n-pentyl-2-cyclopentyl-1,3-dimethoxypropane; 2-(2-pentyl)-2-cyclopentyl-1,3-dimethoxypropane; 2-(3-pentyl)-2-cyclopentyl-1,3-dimethoxypropane; 2-methylbutyl-2-cyclopentyl-1,3-dimethoxypropane; 2-(3-methylbut-2-yl)-2-cyclopentyl-1,3-dimethoxypropane; 2-ethyl-2-cyclohexyl-1,3-dimethoxypropane; 2-n-propyl-2-cyclohexyl-1,3-dimethoxypropane; 2-isopropyl-2-cyclohexyl-1,3-dimethoxypropane; 2-n-butyl-2-cyclohexyl-1,3-dimethoxypropane; 2-isobutyl-2-cyclohexyl-1,3-dimethoxypropane; 2-secbutyl-2-cyclohexyl-1,3-dimethoxypropane; 2-n-pentyl-2-cyclohexyl-1,3-dimethoxypropane; 2-(2-pentyl)-2-cyclohexyl-1,3-dimethoxypropane; 2-(3-pentyl)-2-cyclohexyl-1,3-dimethoxypropane; 2-methylbutyl-2-cyclohexyl-1,3-dimethoxypropane; 2-(3-methylbut-2-yl)-2-cyclohexyl-1,3-dimethoxypropane; and the corresponding 1,3-diethoxypropane analogues.

A further group of suitable 1,3-diethers include: 9,9-bis(methoxymethyl)fluorene; 9,9-bis(methoxymethyl)-2,3,6,7-tetramethylfluorene; 9,9-bis(methoxymethyl)-2,7-dimethylfluorene; 9,9-bis(methoxymethyl)-2,7-diisoproylfluorene; 9,9-bis(methoxymethyl)-2,7-ditertbutylfluorene; 9,9-bis(methoxymethyl)-2,8-dimethylfluorene; 9,9-bis(methoxymethyl)-3,6-dimethylfluorene; 9,9-bis(methoxymethyl)-3,6-ditertbutylfluorene; 9,9-bis(methoxymethyl)-3,6-diisopropylfluorene; 9,9-bis(methoxymethyl)-4,5-dimethylfluorene; 9,9-bis(methoxymethyl)-2-methylfluorene; 9,9-bis(methoxymethyl)-4-methylfluorene; and the corresponding 9,9-bis(ethoxymethyl)- analogues.

Preferably, the at least one 1,3-diether is selected from the group comprising 2,2-di-isobutyl-1,3-dimethoxypropane; 2,2-di-isopropyl-1,3-dimethoxypropane; 2,2-dicyclopentyl-1,3-dimethoxypropane; 2-isopropyl-2-isopentyl-1,3-dimethoxypropane; 2-isopropyl-2-isobutyl-1,3-dimethoxypropane; 2-isopropyl-2-cyclopentyl-dimethoxypropane; 2-ethyl-2-tert-butyl-1,3-dimethoxypropane; the corresponding 1,3-diethoxypropane analogues; 9,9-bis(methoxymethyl)fluorene or 9,9-bis(ethoxymethyl)fluorene; and combinations thereof.

According to even more preferred embodiments, the at least one 1,3-diether is selected from the group comprising or consisting of 2,2-di-isobutyl-1,3-dimethoxypropane; 2,2-di-isopropyl-1,3-dimethoxypropane; 2,2-di-cyclopentyl-1,3-dimethoxypropane; 2-isopropyl-2-isopentyl-1,3-dimethoxypropane; 2-isopropyl-2-isobutyl-1,3-dimethoxypropane; 2-isopropyl-2-cyclopentyl-dimethoxypropane; 2-ethyl-2-tert-butyl-1,3-dimethoxypropane; and combinations thereof.

In one or more embodiments, the at least one 1,3-diether is 2-isopropyl-2-isopentyl-1,3-dimethoxypropane.

As mentioned above, the first internal electron ID1 consists of at least one diester, *i.e.,* one or more diesters with different molecular structures. The at least one diester comprises one or more maleates and/or substituted maleates. For example, the at least one diester may comprise one or more alkyl-substituted maleates, such as a methyl-substituted maleates or so-called citraconates.

According to one or more embodiments, the at least one diester comprises or consists of one or more diesters represented by the general structure (A): 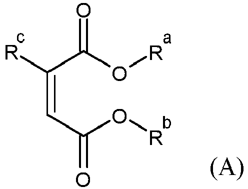 where R^{a} and R^{b} are identical or different and are selected from the group consisting of a linear, branched, or cyclic C₁-C₁₂ alkyl group, and a C₆-C₂₀ aryl group; and R^{c} is hydrogen, or a linear, branched, or cyclic C₁-C₁₂ alkyl group optionally containing one or more heteroatoms.

According to one or more embodiments, R^{a} and R^{b} are identical or different and are selected from linear or branched C₁-C₈ alkyl groups. In one or more embodiments, for example, R^{a} and R^{b} are identical or different and selected from branched C₃-C₆ alkyl groups such as isopropyl, isobutyl, sec-butyl, tert-butyl, isopentyl, sec-pentyl, tert-pentyl, iso-hexyl, sec-hexyl, tert-hexyl; and R^{c} is selected from hydrogen or a linear C₁-C₃ alkyl group.

In one or more embodiments, R^{c} is methyl, *i*.*e*., the corresponding diester is a citraconate. Preferably in these embodiments, R^{a} and R^{b} are identical or different and selected from isopropyl, isobutyl, sec-butyl, tert-butyl, isopentyl, sec-pentyl, tert-pentyl, iso-hexyl, sec-hexyl and tert-hexyl.

In one or more embodiments, the at least one diester comprises or consists of one or more citraconates. Examples of preferred citraconates include di-isopropyl citraconate, di-isobutyl citraconate, di-sec-butyl citraconate, di-tert-butyl citraconate, di-isopentyl citraconate and combinations thereof.

According to one or more embodiments, the first internal donor ID1, *i.e*., the at least one diester, comprises one or more citraconates, and the second internal donor ID2, *i.e*., the at least one 1,3-diether, comprises one or more 1,3-diethers selected from the group 2,2-di-isobutyl-1,3-dimethoxypropane; 2,2-di-isopropyl-1,3-dimethoxypropane; 2,2-di-cyclopentyl-1,3-dimethoxypropane; 2-isopropyl-2-isopentyl-1,3-dimethoxypropane; 2-isopropyl-2-isobutyl-1,3-dimethoxypropane; 2-isopropyl-2-cyclopentyl-dimethoxypropane; 2-ethyl-2-tert-butyl-1,3-dimethoxypropane; the corresponding 1,3-diethoxypropane analogues; and combinations thereof.

According to one or more embodiments, the first internal donor ID1, *i.e.*, the at least one diester, comprises one or more citraconates selected from the group comprising di-isopropyl citraconate, di-isobutyl citraconate, di-sec-butyl citraconate, di-tert-butyl citraconate, di-isopentyl citraconate and combinations thereof; and the second internal donor ID2, *i.e.*, the at least one 1,3-diether, comprises or consists of one or more 1,3-diethers selected from the group 2,2-di-isobutyl-1,3-dimethoxypropane; 2,2-di-isopropyl-1,3-dimethoxypropane; 2,2-dicyclopentyl-1,3-dimethoxypropane; 2-isopropyl-2-isopentyl-1,3-dimethoxypropane; 2-isopropyl-2-isobutyl-1,3-dimethoxypropane; 2-isopropyl-2-cyclopentyl-dimethoxypropane; 2-ethyl-2-tert-butyl-1,3-dimethoxypropane; and combinations thereof.

According to one or more embodiments, the first internal donor ID1, *i.e.*, the at least one diester, comprises one or more citraconates selected from the group comprising di-isopropyl citraconate, di-isobutyl citraconate, di-sec-butyl citraconate, di-tert-butyl citraconate, di-isopentyl citraconate and combinations thereof; and the second internal donor ID2, *i.e*., the at least one 1,3-diether, comprises or consists of 2-isopropyl-2-isopentyl-1,3-dimethoxypropane.

According to one or more embodiments, the phthalate-free Ziegler-Natta pre-catalyst of the present disclosure is in solid, particulate form. The shape of the pre-catalyst particles may for example be spherical, spheroid and/or granular. In one or more embodiments, the average particle size (d₅₀) of the pre-catalyst is comprised between 10 and 100 µm, *e.g.*, between 15 and 60 µm. The particle size distribution may for example be comprised between 0.4 and 2.5, *e.g*., between 0.5 and 2.0. With respect to the porosity of the particles of pre-catalyst, in one or more embodiments, the BET surface area may for example be comprised between 70 and 500 m²/g, *e.g*., between 100 and 400 m²/g, and the BET pore volume between 0.03 and 0.5 cm³/g, *e.g*., between 0.05 and 0.3 cm³/g. In one or more embodiments, the average pore width is comprised between 1 and 8 nm, *e.g*., between 2 and 7 nm.

As mentioned above, the pre-catalyst comprises a Mg-based support. The pre-catalyst and the Mg-based support present in the pre-catalyst may result from a process aiming at producing the pre-catalyst as defined according to the above aspect of the present disclosure. Such a process is detailed below as a further aspect of the present disclosure and may for example be similar to those described in patent documents US 10626199 B2, WO 2009/152268 A1, WO 2014/079969 A1, US 4399054 A, or US 6437061 B1.

In one or more embodiments, the pre-catalyst and the Mg-based support thereof are obtainable from a Mg-based precursor selected from the group comprising:
- MgCl₂-xROH supports, wherein x is in the range of from 1.5 to 6.0 and ROH is an alcohol or a mixture of alcohols, and wherein R is a linear, cyclic, or branched hydrocarbon moiety having from 1 to 10 carbon atoms;
- supports having the general structure Mg(OR₁)ₙ(OR₂)ₘX₂₋ₙ₋ₘ, wherein X is a halogen; R₁ and R₂ are different, and may be a linear, cyclic, or branched hydrocarbon moiety having from 1 to 16 carbon atoms; and 0 ≤ n < 2 and 0 ≤ m < 2 and n+m+(2-n-m) = 2, provided that both n and m ≠ 0;
- mixtures of Mg(OR₃)_{n'}X_{2-n'} and Mg(OR₄)_{m'}X_{2-m'}, wherein X is a halogen; R₃ and R₄ are different, and may be a linear, cyclic, or branched hydrocarbon moiety having from 1 to 16 carbon atoms; and 0 < n' ≤ 2, and 0 < m' ≤ 2;
- combinations thereof.

For example, the Mg-based precursor may be of MgCh-xROH type. In one or more embodiments, R is a linear, cyclic, or branched hydrocarbon moiety having from 3 to 10 carbon atoms, *e.g.*, from 4 to 10 carbon atoms. In one or more embodiments, R is for example, a methyl, ethyl, propyl, butyl, pentyl, cyclopentyl, hexyl, cyclohexyl, heptyl or octyl. In one or more embodiments, x ranges from 1.5 to 6.0, *e.g.,* from 2.0 to 4.0, *e.g.*, from 2.4 to 3.4, *e.g.*, from 2.60 to 2.80; *e.g.*, 2.65 and 2.75. In one or more preferred embodiments, ROH is ethanol or a mixture of ethanol and a higher alcohol. In one or more embodiments, ROH is an alcohol or a mixture of at least two different alcohols, preferably where the ROH is ethanol or a mixture of ethanol and a higher alcohol with R being a linear, cyclic or branched hydrocarbon unit with 3-10 carbon atoms such as propyl, butyl, pentyl, cyclopentyl, hexyl, cyclohexyl, heptyl or octyl, preferably 4-10 carbon atoms such as butyl, pentyl, cyclopentyl, hexyl, cyclohexyl, heptyl or octyl. In one or more embodiments, the molar ratio of ethanol: higher alcohol may be at least 80:20, *e.g.*, at least 90:10, *e.g.*, at least 95:5.

In one or more embodiments, the Mg-based precursor is of alkoxy type. The Mg-based precursor may for example have the general structure Mg(OR₁)ₙ(OR₂)ₘX₂₋ₙ₋ₘ or may be a mixture of Mg(OR₃)_{n'}X_{2-n'} and Mg(OR₄)_{m'}X_{2-m'} wherein X is a halogen; R₁ and R₂ are different, R₃ and R₄ are different, and R₁ and R₄ may be a linear, cyclic, or branched hydrocarbon moiety, *e.g.*, an alkyl group, having from 1 to 16 carbon atoms, *e.g.*, from 1 to 10 carbon atoms; and wherein 0 ≤ n < 2 and 0 ≤ m < 2 and n+m+(2-n-m) = 2, provided that both n and m ≠ 0, 0 < n' ≤ 2, and 0 < m' ≤ 2.

The Mg-based precursor may be selected from the group comprising magnesium dialkoxides, diaryloxy magnesium, alkyloxy magnesium halides, aryloxy magnesium halides, alkyl magnesium alkoxides, aryl magnesium alkoxides, alkyl magnesium aryloxides.

The Mg-based precursor may for example be available as a particulate solid. In one or more embodiments, the Mg-based precursor is a particulate solid having a shape selected from spherical, spheroid and/or granular.

In one or more embodiments, the Mg-based precursor has an average particle size (d₅₀) of from 10 microns to 200 microns, *e.g.*, from 20 microns to 150 microns, and for example comprised between 30 microns to 120 microns, *e.g*., between 40 microns to 90 microns. In some embodiments, the Mg-based precursor is produced according to US 4,829,034 of Iiskolan and Koskinen or US 5,905,050 of Koskinen and Louhelainen, by spray-cooling of a molten MgCl₂-alcohol adduct.

Examples of commercially available Mg-based precursors suitable in one or more embodiments disclosed herein may include, for example the compound Catylen^{®} S300 available from Evonik.

The phthalate-free Ziegler-Natta pre-catalyst according to the present disclosure includes a transition metal selected from Groups 4 to 8 of the periodic table, preferably from Groups 4 to 6. In preferred embodiments, the catalyst incorporates Ti, Zr, V or Cr, and most preferably Ti. The transition metal may typically be provided in a halogenated form, such as a chloride, bromide or iodide. Titanium chlorides, such as *inter alia* TiCl₄, TiCl₃, TiClₓ-adduct(s), are particularly preferred.

One or more embodiments disclosed herein are directed to the pre-catalyst according to the present disclosure, in which a molar ratio (ID1:ID2) of first internal donor over second internal donor in the pre-catalyst is comprised between 1:100 to 100:1, such as in the range from 100:1 to 1:1, or in the range from 1:1 to 1:100. In one or more embodiments, the molar ratio (ID1:ID2) may be in the range from 100:1 to about 1:1, such as in the range from 50:1 to 1:1 or from 10:1 to 1:1. In one or more embodiments, the molar ratio ID1:ID2 in the pre-catalyst may be of at least 5:95, *e.g.*, at least 10:90, *e.g.*, at least 15:85, at least 20:80, *e.g.,* at least 25:75, *e.g.*, at least 30:70, *e.g.*, at least 35:65, *e.g.*, at least 40:60, *e.g.*, at least 45:55, *e.g.*, at least 50:50, *e.g.*, at least 60:40, *e.g.*, at least 65:35, *e.g.*, at least 70:30, *e.g.*, at least 75:25, *e.g.*, at least 80:20, *e.g.*, at least 85:15, *e.g.*, at least 90:10, *e.g.*, at least 95:5. In one or more embodiments, the mass ratio ID1:ID2 in the pre-catalyst may be may be of at least 5:95, *e.g.*, at least 10:90, *e.g.*, at least 15:85, *e.g.*, at least 20:80, *e.g.*, at least 25:75, *e.g.*, at least 30:70, *e.g.*, at least 35:65, *e.g.*, at least 40:60, *e.g.*, at least 45:55, *e.g.*, at least 50:50, *e.g.*, at least 60:40, *e.g.*, at least 65:35, *e.g.*, at least 70:30, *e.g.*, at least 75:25, *e.g.*, at least 80:20, *e.g.*, at least 85:15, *e.g.*, at least 90:10, *e.g.*, at least 95:5.

### PROCESS FOR PRODUCING THE PRE-CATALYST

In a further aspect of the present disclosure, embodiments disclosed herein relate to a process for producing a phthalate-free pre-catalyst as defined in the above aspect.

The process for producing the phthalate-free Ziegler-Natta pre-catalyst may comprise one or more the following Steps a) to i) described below. The Mg-based precursor, the transition metal, as well as the first and second internal electron donors ID1 and ID2 which are mentioned in this process refer to the same compounds as mentioned above with reference to the aspect of the present disclosure directed to the pre-catalyst.

Step a) may comprise contacting the Mg-based precursor with a compound containing the transition metal, in a reactor at a temperature between -30°C and +40°C, preferably +10°C or less, with stirring. The reactor may be charged with the Mg-based precursor and the transition metal compound in either order, *i.e.*, the Mg-based precursor may be added first and then the transition metal compound may be added, or *vice versa*, but the addition of the Mg-based precursor to the transition metal compound is preferred. The transition metal compound may be diluted with an aliphatic or aromatic organic solvent, preferably an aliphatic hydrocarbon, most preferably a linear aliphatic hydrocarbon like heptane or a mixture of branched hydrocarbons like ISOPAR-H. In one or more embodiments, the Mg-based precursor is added to the reactor over a period of time, preferably between 4 minutes and 300 minutes, *e.g*., between 30 minutes and 90 minutes. The molar ratio of the Mg of the Mg-based precursor to the transition metal is between 1:100 and 1:5, preferably between 1:50 and 1:5, and most preferably between 1:25 and 1:5. In or more embodiments, the compound containing the transition metal is selected from the group comprising TiCl₄, TiCl₃, Ti(OR)ₙXₘ where X is a halogen and R is a linear or branched alkyl group of from 1 to 20 carbon atoms, *e.g*., 1 to 10 carbon atoms, and with n = 1 to 4 and m = 4-n.

Step b) may comprise heating the mixture in the reactor to a temperature of between 30°C to 100°C. In one or more embodiments, the reactor is heated to a temperature of between about 40 °C and 90 °C over a period of about 2 hours.

Step c) may comprise, concurrent with the heating in Step b), or following reaching the temperature of step (b), adding a first mixture of the first and second internal electron donors (ID 1 + ID2). In one or more embodiments, the first mixture (ID1+ID2) is used in an amount of from 0.01 to 2 moles for each mole of the Mg from the Mg-based precursor used in Step a), for example from 0.05 to 0.6 mole, *e.g.*, from 0.1 to 0.3 mole for each mole of Mg.

In Step d), the resulting mixture may be further heated to a temperature of at least 80°C, preferably between 100°C and 125°C, more preferably between 100°C and 110°C and held at that temperature for a predetermined period of time, preferably between about 10 minutes and three hours. A suspension containing a solid component may thus be formed.

In Step e), the resulting suspension may then be filtered, in some embodiments while still hot, *e.g.*, at a temperature of at least 80°C, at least 100°C, at least 110°C, in order to isolate the solid component.

In Step f), the solid component may be washed with an organic solvent.

Step g) corresponds to a subsequent washing step of the filtered solid component. Step g) may comprise, at least once, the following cycle of substeps i), ii) and iii). Substep i) may comprise adding to the filtered solid component a washing solution comprising a hydrocarbon solvent, a compound containing the transition metal, and optionally a second mixture of the first and second internal electron donors (ID1 + ID2). The molar ratio of the compound containing the transition metal added in substep i) to the Mg of the Mg-based precursor may be between 1 and 30, preferably between 5 and 20, and most preferably between 10 and 15. In embodiments wherein a second mixture (ID1 + ID2) is also comprised in the washing solution, the ratio of each of ID1 or ID2, to the Mg of the Mg-based precursor may be between 0.01 and 1, preferably between 0.01 and 0.5, and most preferably between 0.01 and 0.1. Substep ii) may comprise heating the resulting mixture to at least 90°C, *e.g*., at least 110°C and holding the resulting mixture at that temperature for at least 30 minutes, *e.g*., at least 1 hour, *e.g.*, at least 2 hours. Substep iii) may comprise filtering the mixture, for example, while still hot, at a temperature of at least 90°C, *e.g*., at least 110°C.

In Step h), the solid component may be dried, for example under vacuum, or with a N₂-stream, and/or at a temperature of from 30°C to 100°C. The dried solid corresponds to the desired pre-catalyst.

Optional Step i) amounts to, after Step f), repeating Steps c) to f) at least once, wherein, for example, in *repeated* Step c, the amount of first mixture (ID1+ID2) added with respect to Mg, is distinct from the amount used in Step c).

### PHTHALATE-FREE ZIEGLER-NATTA CATALYST

In a further aspect, embodiments disclosed herein relate to a phthalate-free Ziegler-Natta catalyst for the production of homopolymers or copolymers of polypropylene. The catalyst comprises the pre-catalyst as defined in the above aspect, a co-catalyst, and optionally one or more external electron donors (ED).

The co-catalyst comprises an organo-aluminum compound selected from the group comprising alkylaluminum compounds, alkylaluminum halides, alkylaluminum hydrides, alkylaluminum sesquichlorides, and mixtures thereof.

The optional one or more external electron donors (ED) are selected from the group comprising mono- and poly-functional carboxylic acids, carboxylic anhydrides, carboxylic esters, ketones, ethers, alcohols, lactones, organic phosphorus-containing compounds, organic silicon-containing compounds, and combinations thereof.

Suitable organo-aluminum compounds may include aluminum trialkyls and derivatives thereof in which one or more alkyl groups are substituted by an alkoxy group or a halogen atom, *e.g.*, a chlorine or bromine atom. Diethylaluminum chloride (DEAC) may for example be used in one or more embodiments. The alkyl groups may be the same or different. The alkyl groups may be linear or branched chain alkyl groups. Preferred trialkylaluminum compounds are those wherein the alkyl groups each have 1 to 8 carbon atoms, such as trimethylaluminum, triethylaluminum, tri-isobutylaluminum, trioctylaluminum or methyldiethylaluminum.

In one or more embodiments, the co-catalyst comprises or consists of an organo-aluminum compound selected from the group comprising trialkylaluminum compounds, *e.g*., trimethylaluminum, triethylaluminum (TEA), triisobutylaluminum, tri-n-hexylaluminum, tri-n-octylaluminum. In one or more embodiments, the co-catalyst comprises or consists of TEA.

Preferred external electron donors (ED) are organosilicon compounds of general formula (IV):

R⁹ₐSi(OR¹⁰)₄₋ₐ (IV)

wherein each of the R⁹ radicals which may be the same or different, represent C₁-C₂₀ alkyl groups, 5- to 7-membered cyclic alkyl groups optionally substituted with C₁-C₁₀ alkyl, C₆-C₁₈ aryl groups or C₆-C₁₈ arylalkyl or alkylaryl groups; and the R¹⁰ radicals may be the same or different and are C₁-C₂₀ alkyl groups; and a is the integer 1, 2 or 3.

In one or more embodiments, the optional one or more external electron donors (ED) are selected from the group comprising diisopropyldimethoxysilane, dimethyldimethoxysilane, tetramethoxysilane, tetraethoxysilane, di(tert-butyl)dimethoxysilane, isobutyl(isopropyl)dimethoxysilane, diisobutyldimethoxysilane, dicyclopentyldimethoxysilane, cyclopentyl(methyl)dimethoxysilane, cyclohexyl(methyl)dimethoxysilane, dicyclohexyldimethoxysilane, isopropyl(tert-butyl)dimethoxysilane, isopropyl(sec-butyl)dimethoxysilane, isobutyl(sec-butyl)dimethoxysilane, bicyclo[2.2.1]heptan-2-yl dimethoxy-(methyl)silane, bicyclo[2.2.1]heptan-2-yl trimethoxysilane, and di(bicyclo[2.2.1]heptan-2-yl)dimethoxysilane.

To prepare the phthalate-free Ziegler-Natta catalyst described herein, the co-catalyst (comprising the organo-aluminum compound) may be contacted with the pre-catalyst separately in any order or mixed together, normally at a temperature in the range of from 0°C to 200°C, preferably from 20°C to 90°C, and a pressure of from 1 to 100 bar, in particular from 1 to 40 bar.

In one or more embodiments, the pre-catalyst is stored in oil or liquid monomer, preferably liquid propylene, and is dosed directly into the polymerization reactor together with additional liquid propylene, while the co-catalyst is dosed separately to the reactor.

In one or more embodiments, the co-catalyst is added in such an amount that the molar ratio of the organo-aluminum compound to the transition metal of the pre-catalyst is from 10:1 to 800:1, in particular from 20:1 to 200:1.

### POLYMERIZATION PROCESS

In a further aspect, embodiments disclosed herein relate to a process for polymerizing propylene, the process comprising contacting, in a polymerization reactor, propylene, and optionally one or more comonomers, with the phthalate-free Ziegler-Natta pre-catalyst or catalyst as defined in the above aspects; and polymerizing propylene, optionally with the one or more comonomers. According to one or more embodiments, the catalyst may be formed *in situ* from the pre-catalyst, for example during the contacting step. Accordingly, the process may comprise a step of adding the co-catalyst and/or the one or more EDs to the polymerization reactor.

The catalytic systems described herein may be advantageously used in the polymerization of alk-1-enes. Suitable alk-1-enes include linear or branched C₂-C₁₂ alkenes, in particular linear C₂-C₁₀ alk-1-enes such as ethylene, propylene, but-1-ene, pent-1-ene, hex-1-ene, hept-1-ene, oct-1-ene non-1-ene, dec-1-ene or 4-methylpent-1-ene. Mixtures of these alk-1-enes may be polymerized as well.

The phthalate-free Ziegler-Natta catalyst according to the present disclosure represents an excellent catalytic system for use in the production of propylene polymers, both homopolymers of propylene as well as co-polymers of propylene and one or more further alk-1-enes having up to 10 carbon atoms. The term co-polymers as used herein also refers to co-polymers wherein the further alk-1-ene having up to 10 carbon atoms is incorporated randomly. In these co-polymers, in general, the co-monomer content is less than about 15% by weight. The copolymers may also be in the form of so-called block or impact copolymers, which in general comprise at least a matrix of a propylene homopolymer or propylene random co-polymer containing less than 15% by weight of a further alk-1-ene having up to 10 carbon atoms and a soft phase of a propylene co-polymer (rubber phase) containing from 15% to 80% by weight of further alk-1-enes having up to 10 carbon atoms. Also, mixtures of co-monomers are contemplated, resulting in, for example, ter-polymers of propylene.

The production of propylene polymers may be carried out in any common reactor suitable for the polymerization of alk-1-enes, either batchwise or, preferably, continuously, *i.e*., in solution, as suspension polymerization including the bulk polymerization in liquid monomer, or as gas phase polymerization. In one or more embodiments, the process is a gas-phase polymerization process, and optionally includes the use of a helical stirrer in the polymerization reactor. According to one or more embodiments, depending on the required capacity and polymerization product range, the process may comprise the use of more than one polymerization reactors, *i.e.*, at least one two polymerization reactors.

Examples of suitable reactors include continuously stirred reactors, loop reactors, fluid bed reactors, and horizontal or vertical stirred powder bed reactors. The at least one reactor may comprise a bulk reactor, or a gas-phase reactor. It will be understood that the polymerization may be carried out in a series of consecutively coupled reactors or in at least two reactors in parallel.

The reaction time of the polymerizing step, *i.e.,* the polymerization step, may depend on the chosen reaction conditions. In one or more embodiments, the reaction time is from 0.2 to 20 hours, usually from 0.5 to 10 hours, most preferably between 0.5 and 2 hours.

In one or more embodiments, the polymerization step is carried out at a temperature in the range of from 20°C to 150°C, preferably from 50°C to 120°C, and more preferably from 60°C to 95°C, and a pressure in the range of from 1 to 100 bar, preferably from 15 to 50 bar, and more preferably from 20 to 45 bar.

In one or more embodiments, the molar ratio of the co-catalyst to propylene is between 1:100 and 30:100, preferably between 1:100 and 20: 100, and most preferably between 3: 100 and 12:100. In one or more embodiments in which one or more external electron donors are used, the molar ratio of the co-catalyst to external electron donor(s) (ED(s)) is between 1:1 and 300:1, preferably between 5:1 and 200:1, and most preferably between 8:1 and 170:1. In one or more embodiments, the mass ratio of the co-catalyst to the pre-catalyst is between 0.5 and 100, preferably between 1 and 50, and most preferably between 1 and 20. In one or more embodiments, the molar ratio of the co-catalyst to the transition metal used in Step a) of forming the pre-catalyst, is between 5 and 1000, preferably between 10 and 500, and most preferably between 20 and 350. In one or more embodiments, the mass ratio of the ED(s) to the pre-catalyst is between 0 and 10, preferably between 0 and 5, and most preferably between 0 and 1. In one or more embodiments, the molar ratio of the ED(s) to the transition metal used in Step a) of forming the pre-catalyst is between 0 and 50, preferably between 0 and 30, and most preferably between 0 and 15.

In one or more embodiments, the process for polymerizing propylene may include, prior to the contacting step, a step of selecting the pre-catalyst which is used in the process, be it directly or indirectly under the form of the catalyst comprising a co-catalyst and optionally one or more EDs. Such a selection may include a step of varying a ratio, in the pre-catalyst, of the first internal electron donor (ID1) to the second internal electron donor (ID2) in order to identify an upper limit of XS content in a polymer formed for a pre-determined set of polymerization conditions involving the pre-catalyst. Once the XS content upper limit is identified for such a pre-determined set of polymerization conditions, the pre-catalyst containing the corresponding ratio of ID1 to ID2 may be used as the pre-catalyst comprised in the process for polymerizing propylene according to one or more embodiments.

The predetermined set of polymerization conditions involving the pre-catalyst, which are used to select the pre-catalyst, may be identical to the ones described above with reference to the polymerizing step or vary to a certain extent. Such conditions may comprise the use of a co-catalyst as described above in order to form a Ziegler-Natta catalyst. In one or more embodiments, such a predetermined set of polymerization conditions used for selecting the pre-catalyst does not involve the use of any ED.

In one or more embodiments, the process may comprise, once the pre-catalyst is selected according to the selection step described above, a step of varying an amount of ED in order to be able to access lower XS values than the upper limit of XS content identified in the step of selecting the pre-catalyst. In this manner, very advantageously, a single catalyst may be used for industrial production of the full XS range, without catalyst transition, thereby providing significant benefits to overall plant operations, such as, higher throughputs and worry-free production, reduced materials handling, and other factors as may be recognized by one skilled in the art.

The catalysts described herein enable polymerization of alk-1-enes and produce polymers having a good morphology and a high bulk density when compared with the prior art catalytic systems. In addition, the catalysts may show a dramatic increase of productivity.

Catalysts according to embodiments herein may be used to produce propylene homopolymers and copolymers having a XS content range of between 0.5 and 10 wt%, which cannot be achieved by prior art catalyst systems without catalyst transition. For example, catalysts described herein may be used to produce a propylene polymer having a xylene solubles content of about 1.0 wt% in some embodiments; greater than 2 wt% in other embodiments; and greater than 4 wt% or 6 wt% in yet other embodiments. Catalysts disclosed herein may be used to produce multiple grades of propylene polymers having XS contents in the range from 0.5 to 10 wt% in one or more embodiments; in the range from 1.0 to 8.0 wt%, *e.g.,* 1.0 to 7.0 wt%, in other embodiments; and in the range from 1.5 to 5.0 wt% in yet other embodiments.

In the case of block or impact copolymers, which may be polymerized using the catalytic systems using diether internal donors according to embodiments herein in at least two polymerization steps and which in general comprise at least a matrix of a propylene homopolymer or propylene random co-polymer and a propylene co-polymer rubber, the XS content of the polymer may be measured using a sample of the propylene homopolymer or propylene random co-polymer. Such a sample may be drawn from the polymerization after the homopolymer or random polymer polymerization step(s) but before the propylene copolymer rubber part is produced. Such propylene homopolymer or propylene random co-polymer matrix components have in some embodiments a XS content in the range of 0.5 to 3.5 wt% or 0.8 to 2.5 wt% and in the range from about 1.0 to 1.8 wt% in yet other embodiments.

The XS content in the polymer may be measured according to ISO 16152.

The Xylene Solubles may be separated by heating the polymer resin in boiling xylene. Upon cooling, the crystallizable part of the polymer is precipitated. The non-crystallizable fraction remains dissolved, and is referred to as the "Xylene Solubles" (XS).

The molecular weight of the resulting polymers may be controlled and adjusted over a wide range by adding polymer chain transfer or termination agents as commonly used in the art of polymerization, such as hydrogen. In addition, an inert solvent, such as toluene or hexane, or an inert gas, such as nitrogen or argon, and smaller amounts of a powdered polymer, *e.g*., polypropylene powder, may be added.

The weight average molecular weights of the propylene polymers produced by using the catalysts described herein in general may be in the range of from 10,000 to 2,000,000 g/mole and the melt flow rates in the range of from 0.01 to 2000 g/10 min, preferably from about 0.1 to 100 g/10 min. Certain applications might require different molecular weights than mentioned above and are contemplated to be included within the scope of embodiments herein. Catalysts according to one or more embodiments herein may be used to produce propylene homopolymers and copolymers having a MFR range with a lower limit of 0.1, 5, 10, 15, 17, 19, or 21 g/10 min and un upper limit of 30, 40, 50, 60, 70, 90, or 100 g/10 min, as measured according to ASTM method D 1238-04.

Due to their good mechanical properties, the polymers obtainable by using the catalysts disclosed herein, and in particular the propylene homo polymers or the co-polymers of propylene with one or more alk-1-enes having up to 10 C-atoms, can be used advantageously for the production of pipe, film, fiber or moldings and in particular for the production of film.

According to a further aspect of the present disclosure, embodiments disclosed herein relate to a phthalate-free Ziegler-Natta pre-catalyst comprising a Mg-based support, a transition metal selected from Groups 4 to 8 of the periodic table, a first internal electron donor (ID1) consisting of at least one diester, and a second internal electron donor (ID2) consisting of at least one 1,3-diether. The Mg-based support and the transition metal selected from Groups 4 to 8 of the periodic table may be similar or identical to those mentioned with reference to the above aspects. Such a pre-catalyst may be used in a catalyst as described above, namely a phthalate-free Ziegler-Natta catalyst for the production of homopolymers or copolymers of polypropylene, comprising the pre-catalyst, a co-catalyst comprising an organo-aluminum compound as defined in the above aspects, and optionally one or more EDs as defined in the above aspects.

According to yet a further aspect, embodiments disclosed herein relate to a phthalate-free Ziegler-Natta catalyst for the production of homopolymers or copolymers of polypropylene, comprising a pre-catalyst; a co-catalyst comprising an organo-aluminum compound as defined in the above aspects; and optionally one or more EDs as defined in the above aspects. The pre-catalyst comprises a Mg-based support, a transition metal selected from Groups 4 to 8 of the periodic table, a first internal electron donor (ID 1) consisting of at least one diester, and a second internal electron donor (ID2) consisting of at least one 1,3-diether. The Mg-based support and the transition metal selected from Groups 4 to 8 of the periodic table may be similar or identical to those mentioned with reference to the above aspects.

In one or more embodiments, the catalyst, in the absence of any ED and for a pre-determined set of polymerization conditions, produces a propylene homopolymer having an upper limit value of Xylene Solubles (XS) of at least 2 wt%, for example at least 3 wt%, at least 4 wt%, at least 5 wt%, at least 6 wt%, at least 7 wt%, at least 8 wt%, at least 9 wt%, at least 10 wt%.

In one or more embodiments, the pre-determined set of polymerization conditions may be identical to the ones described above with reference to the polymerizing step of the process of the present disclosure, or vary to a certain extent.

According to yet a further aspect, embodiments disclosed herein relate to a process for polymerizing propylene, the process comprising contacting, in a polymerization reactor, propylene, and optionally one or more comonomers with a phthalate-free Ziegler-Natta catalyst or pre-catalyst. The phthalate-free Ziegler-Natta pre-catalyst or catalyst may be as defined in paragraphs [00099], and [000100]-[000102], respectively.

The process may further include, prior to contacting, a step of selecting the pre-catalyst, wherein the selecting includes a step of varying a ratio, in the pre-catalyst, of the first internal electron donor (ID1) to the second internal electron donor (ID2) in order to identify an upper limit of XS content in a polymer formed for a pre-determined set of polymerization conditions involving the pre-catalyst. Such a selection step may be identical as the one described with reference to the above aspect directed to the polymerization process of paragraph [00079].

### EXAMPLES

The following section provides particular, illustrative, non-limiting examples of phthalate-free Ziegler-Natta pre-catalysts and catalysts according to one or more embodiments of the present disclosure. In particular, their performance in polymerization is assessed from the angle of the resulting XS content, and compared with the performance of conventional pre-catalysts containing phthalate or diether internal electron donors.

### PRECATALYST SYNTHESIS

All pre-catalysts were made using a Mg-based precursor being a spherical MgCl₂-2.7EtOH support with a d50 of 41.9 micron and a span (d50/(d90-d10)) of 1.23. The general procedure and the equipment used for the synthesis of the pre-catalysts or catalysts is described in patent application WO 2009/152269 A1, while the description of exemplary embodiments is not intended to limit the scope of the invention in any way.

### Comparative Example 1

Initially a mixture of 90 mL of TiCl₄ and 28 g of n-Heptane were charged to a glass reactor and cooled down to -15°C. 8.5 g of the Mg solid support were added portionwise to the mixture over a period of 45 min, while maintaining the reactor temperature below 0°C. After the support addition was completed, the temperature was kept at -15°C for another 15 min and then increased to 20°C at a rate of 50°C/h. Then 1.25 g of 2-isopropyl-2-isopentyl-dimethoxypropane as the Internal Donor (ID) were added. The suspension was heated to 110°C at a rate of 55°C/h and kept at that temperature for 30 min. The solution was filtered through a P100-frit and the residual solid washed at 110°C with 100 ml of Toluene and 100 ml of heptane. Afterwards, another 0.42 g of the same internal donor was added and subsequently 150 ml of a 3:2-mixture of TiCl₄ and Toluene were added and stirred at 115°C for 2 h. After filtration this washing step was repeated twice with stirring times of 15 min each. Finally, the product was washed three times with 100 ml of heptane and vacuum dried to yield ~4 g of final pre-catalyst.

### Comparative Example 2

Initially a mixture of 90 mL of TiCl₄ and 28 g of n-Heptane were charged to a glass reactor and cooled down to -15°C. 8.5 g of the Mg solid support were added portionwise to the mixture over a period of 45 min, while maintaining the reactor temperature below 0°C. After the support addition was completed, the temperature was kept at -15°C for another 15 min and then increased to 20°C at a rate of 50°C/h. Then 0.93 g of 2-isopropyl-2-isopentyl-dimethoxypropane as the Internal Donor (ID) were added. The suspension was heated to 110°C at a rate of 55°C/h and kept at that temperature for 30 min. The solution was filtered through a P100-frit and the residual solid washed at 110°C with 100 ml of Toluene and 100 ml of heptane. Afterwards, another 0.32 g of the same internal donor was added and subsequently 150 ml of a 3:2-mixture of TiCl₄ and Toluene were added and stirred at 115°C for 2 h. After filtration this washing step was repeated twice with stirring times of 15 min each. Finally, the product was washed three times with 100 ml of heptane and vacuum dried to yield ~4 g of final pre-catalyst.

### Comparative Example 3

Initially a mixture of 90 mL of TiCl₄ and 28 g of n-Heptane were charged to a glass reactor and cooled down to -15°C. 9.0 g of the Mg solid support were added portionwise to the mixture over a period of 45 min, while maintaining the reactor temperature below 0°C. After the support addition was completed, the temperature was kept at -15°C for another 15 min and then increased to 60°C at a rate of 50°C/h. Then 1.46 g of Di-isobutyl-phthalate as the Internal Donor (ID) were added. The suspension was heated to 110°C at a rate of 55°C/h and kept at that temperature for 30 min. The solution was filtered through a P100-frit and the residual solid washed at 110°C with 100 ml of Toluene and 100 ml of heptane. Afterwards, 150 ml of a 3:2-mixture of TiCl₄ and Toluene were added and stirred at 115°C for 2 h. After filtration this washing step was repeated twice with stirring times of 15 min each. Finally, the product was washed three times with 100 ml of heptane and vacuum dried to yield ~4 g of final pre-catalyst.

### Inventive pre-catalysts : Examples 1 to 4

The inventive pre-catalysts 1-4 were prepared similarly to the synthesis of Comparative Example 1, with the exception that instead of the two additions of 1.25 g of 2-isopropyl-2-isopentyl-dimethoxypropane and 0.42 g of 2-isopropyl-2-isopentyl-dimethoxypropane, respectively different ratios of 2-isopropyl-2-isopentyl-dimethoxypropane (ID2) and di-isobutyl citraconate were added (ID1), as shown in Table 1.

**Table 1. Amounts of ID1 and ID2 used in the synthesis of pre-catalysts 1-4**

| Catalysts | 1^{st} Addition - ID2 | 1^{st} Addition - ID1 | 2^{nd} Addition - ID2 | 2^{nd} Addition - ID1 |
|---|---|---|---|---|
| Ex.1 | 3g | 0.75g | 1g | 0.25g |
| Ex.2 | 1.88g | 1.88g | 0.63g | 0.63g |
| Ex.3 | 1.13g | 2.63g | 0.38g | 0.88g |
| Ex.4 | 1.5g | 2.25g | 0.5g | 0.75g |

### POLYMERIZATION TESTING

The performance of the catalysts resulting from inventive pre-catalysts 1-4 was tested in gas-phase polymerizations of propylene under two different standard conditions, namely either with a standardized amount of external electron donor (ED) to determine the lowest achievable XS of the resulting polymer or without the use of ED to determine the highest achievable XS.

### Polymerization Conditions

### Test-method A (without ED):

333 g of propylene, 2.5 ml of triethylaluminum (TEAL) and 0.11 g of hydrogen were added into a 5-liter reactor equipped with a helical stirrer at 25°C and stirred at 200 rpm for 5 min. Within 10 min the reactor was heated up to 75°C. During this heating phase, the pre-catalyst is injected when the reactor reaches 40°C. After reaching 75°C the polymerization run was allowed to proceed for 1 hour. Afterwards, the non-reacted propylene was removed, the polymer powder was collected and let to degass for 24 h at ambient conditions before measurement of MFR and XS was done.

### Test-method B (with ED)

The polymerization procedure is identical to Test-method A, except that initially, 0.5 ml of cyclopentyl-methyl-dimethoxysilane (C-Donor) were added to the 5-liter reactor.

The **Activity** in **[kg_{PP}/(g_{cat}xh)]** was determined by weighing out the collected polymer powder, which was produced during a 1-hour polymerization run, divided by the weight of the catalyst charged to the reactor.

The **Xylene Solubles (XS) or XS content** in **[wt%]**, were measured using a Viscotek Flow Injector Polymer Analysis (FIPA) technique which is well known in the industry. Viscotek has published an article entitled "FIPA for xylene soluble determination of polypropylene and impact copolymers" showing that the Viscotek FIPA method exhibits a 0.994 r² correlation with ASTM method D5492-06 (equivalent to ISO 16152) over the range of 0.3% to 20% Xylene solubles. Therefore, one of ordinary skill in the art could reproduce the inventive results using either the Viscotek FIPA method or ASTM Method D5492-06. The weight percent of Xylene solubles in the polypropylene is an indication of the stereo-regulating ability of the catalyst system - the higher the wt% XS, the lower the stereospecificity and *vice versa.*

The **Melt Flow Rate (MFR)** in **[g/10 min]** was measured using ASTM method D 1238-04. For each 5 gram sample of polymer, 0.2 g of a standard stabilizing package was added. The additive package consists of 50 wt% Irganox 1010 and 50 wt% Irgafox 168. Because the polymer is exposed to air at 230°C for several minutes during the test, this package is added to inhibit thermal and oxidative degradation of the polymer. The melt flow rate provides information concerning the molecular weight of the polymer and the hydrogen response of the catalyst. The higher the MFR, the higher the hydrogen response rate of the catalyst, that produced the polyolefin. Similarly, the higher the MFR, the lower the molecular weight of the polymer.

**Table 2. Polymerization results**

| Pre-catalyst | Test Method | Activity [kg_{PP}/(g_{cat}xh)] | MFR (2.16 kg) [g/10min] | XS [wt%] |
|---|---|---|---|---|
| Ex. 1 | A | 32.6 | 15.0 | 2.1 |
| Ex. 1 | B | 31.1 | 10.1 | 1.1 |
| Ex. 2 | A | 29.5 | 29.5 | 3.8 |
| Ex. 2 | B | 29.5 | 12.9 | 1.2 |
| Ex. 3 | A | 26.9 | 31 | 6.8 |
| Ex. 3 | B | 28.1 | 12.6 | 1.6 |
| Ex. 4 | A | 26.4 | 22.4 | 5.0 |
| Ex. 4 | B | 30.6 | 13.3 | 1.2 |
| Comp. Ex. 1 | A | 33.6 | 14.8 | 1.3 |
| Comp. Ex. 1 | B | 27.5 | 8.3 | 1.0 |
| Comp. Ex. 2 | A | 48.1 | 11.2 | 3.3 |
| Comp. Ex. 2 | B | 34.2 | 8.3 | 2.1 |
| Comp. Ex. 3 | A | - | - | - |
| Comp. Ex. 3 | B | 34.0 | 14.2 | 1.3 |

Examples 1-4 show that by adjusting the ratio of both internal donors ID1 and ID2 in a pre-catalyst, a broad XS-range can be achieved, and adjusted from 1.1-2.1 wt% to 1.6-6.8 wt%. This shows that the concept is fully functional and could be applied to the industrial production of polypropylene.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A phthalate-free Ziegler-Natta pre-catalyst comprising:
- a Mg-based support;
- a transition metal selected from Groups 4 to 8 of the periodic table;
- a first internal electron donor (ID1) consisting of at least one diester;
- a second internal electron donor (ID2) consisting of at least one 1,3-diether;
wherein the at least one diester comprises one or more maleates and/or substituted maleates; and
wherein the at least one 1,3-diether comprises one or more diethers represented by the general structure (I):
R¹O - (C R⁵R⁶) - CR³R⁴ - (C R⁷R⁸) - OR² (I)
where
R¹ and R² are identical or different and are selected from the group consisting of a saturated or unsaturated aliphatic group of from 1 to 20 carbon atoms or an aryl group of from 6 to 20 carbon atoms;
R³ and R⁴ are identical or different and are each a hydrogen atom or a linear, cyclic or branched hydrocarbon group optionally containing one or more heteroatoms Si, B, Al, O, S, N or P, and optionally containing a halogen atom F, Cl or Br, and/or the two radicals R³ and R⁴ form a hydrocarbon ring system;
R⁵, R⁶, R⁷ and R⁸ are identical or different and are each a hydrogen atom or a linear, cyclic or branched hydrocarbon group optionally containing one or more hetero atoms Si, B, Al, O, S, N or P, and optionally containing a halogen atom F, Cl or Br.

2. The pre-catalyst according to claim 1, wherein the at least one 1,3-diether is selected from the group comprising 2,2-di-isobutyl-1,3-dimethoxypropane; 2,2-di-isopropyl-1,3-dimethoxypropane; 2,2-di-cyclopentyl-1,3-dimethoxypropane; 2-isopropyl-2-isopentyl-1,3-dimethoxypropane; 2-isopropyl-2-isobutyl-1,3-dimethoxypropane; 2-isopropyl-2-cyclopentyl-dimethoxypropane; 2-ethyl-2-tert-butyl-1,3-dimethoxypropane; 2,2-di-isobutyl-1,3-diethoxypropane; 2,2-di-isopropyl-1,3-diethoxypropane; 2,2-di-cyclopentyl-1,3-diethoxypropane; 2-isopropyl-2-isopentyl-1,3-diethoxypropane; 2-isopropyl-2-isobutyl-1,3-diethoxypropane; 2-isopropyl-2-cyclopentyl-diethoxypropane; 2-ethyl-2-tert-butyl-1,3-diethoxypropane; 9,9-bis(methoxymethyl) fluorene; 9,9-bis(ethoxymethyl) fluorene; and combinations thereof, and the corresponding 1,3-diethoxypropane analogues.

3. The pre-catalyst according to claim 1 or claim 2, wherein the at least one diester comprises one or more diesters represented by the general structure (A): 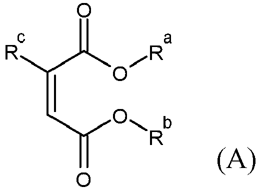 where
R^{a} and R^{b} are identical or different and are selected from the group consisting of a linear, branched, or cyclic C₁-C₁₂ alkyl group or a C₆-C₂₀ aryl group, and
R^{c} is hydrogen, or a linear, branched or cyclic C₁-C₁₂ alkyl group optionally containing one or more heteroatoms.

4. The pre-catalyst according to claim 3, wherein the at least one diester comprises one or more citraconates selected from the group comprising di-isopropyl citraconate, di-isobutyl citraconate, di-sec-butyl citraconate, di-tert-butyl citraconate, di-isopentyl citraconate and combinations thereof.

5. The pre-catalyst according to any one of the preceding claims, wherein the pre-catalyst is obtainable from a Mg-based precursor selected from the group comprising:
- MgCl₂-xROH supports, wherein x is in the range of from 1.5 to 6.0 and ROH is an alcohol or a mixture of alcohols, and wherein R is a linear, cyclic, or branched hydrocarbon moiety having from 1 to 10 carbon atoms;
- supports having the general structure Mg(OR₁)ₙ(OR₂)ₘX₂₋ₙ₋ₘ, wherein X is a halogen; R₁ and R₂ are different, and may be a linear, cyclic, or branched hydrocarbon moiety having from 1 to 16 carbon atoms; and 0 ≤ n < 2 and 0 ≤ m < 2 and n+m+(2-n-m) = 2, provided that both n and m ≠ 0;
- mixtures of Mg(OR₃)_{n'}X_{2-n'} and Mg(OR₄)_{m'}X_{2-m'}, wherein X is a halogen; R₃ and R₄ are different, and may be a linear, cyclic, or branched hydrocarbon moiety having from 1 to 16 carbon atoms; and 0 < n' ≤ 2, and 0 < m' ≤ 2; and
- combinations thereof.

6. The pre-catalyst according to any one of the preceding claims, wherein the transition metal selected from Groups 4 to 8 of the periodic table is titanium, zirconium, vanadium or chromium.

7. The pre-catalyst according to any one of the preceding claims, wherein the molar ratio (ID1:ID2) of first internal donor over second internal donor in the pre-catalyst is comprised between 1: 100 to 100:1.

8. A process for producing a phthalate-free pre-catalyst as defined in the preceding claims, comprising the steps of:
a. contacting a Mg-based precursor, with a compound containing a transition metal selected from Groups 4 to 8 of the periodic table, in a reactor at a temperature of between -30°C and +40°C;
b. heating the mixture in the reactor to a temperature of between 30°C to 100°C;
c. concurrent with the heating in step (b), or following reaching the temperature of step (b), adding a first internal electron donor (ID1) consisting of at least one diester comprising one or more maleates and/or substituted maleates, and a second internal electron donor (ID2) consisting of at least one 1,3-diether, to the mixture in the reactor;
d. heating the resulting mixture to at least 80°C and holding the resulting mixture at that temperature for at least 10 minutes to produce a suspension containing a solid component;
e. filtering the suspension containing the solid component while still hot to separate the solid component;
f. washing the solid component with a hydrocarbon solvent;
g. at least once,
adding to the filtered solid component a washing solution comprising a hydrocarbon solvent, a compound containing a transition metal selected from Groups 4 to 8 of the periodic table, and optionally a mixture of the first and second internal electron donors (ID1 + ID2) as defined in Step c above; and
heating the resulting mixture to at least 90°C and holding the resulting mixture at that temperature for at least 1 hour;
filtering the mixture while still hot;
h. drying the pre-catalyst under vacuum and/or at a temperature of from 30°C to 100°C;
i. optionally, after step f, repeating steps c to f at least once.

9. A phthalate-free Ziegler-Natta catalyst for the production of homopolymers or copolymers of polypropylene, comprising:
- the pre-catalyst as defined in any one of claims 1 to 9;
- a co-catalyst comprising an organo-aluminum compound selected from the group comprising alkylaluminum compounds, alkylaluminum halides, alkylaluminum hydrides, alkylaluminum sesquichlorides, and mixtures thereof; and
- optionally, one or more external electron donors (ED) selected from the group comprising mono- and poly-functional carboxylic acids, carboxylic anhydrides and carboxylic esters, ketones, ethers, alcohols, lactones, as well as organic phosphorus and silicon compounds.

10. The phthalate-free Ziegler-Natta catalyst of claim 9, wherein the co-catalyst is selected from the group comprising trialkylaluminum compounds.

11. The phthalate-free Ziegler-Natta catalyst of claim 9 or 10, wherein the one or more external electron donors (ED) are selected from the group comprising diisopropyldimethoxysilane, dimethyldimethoxysilane, tetramethoxysilane, tetraethoxysilane, di(tert-butyl)dimethoxysilane, isobutyl(isopropyl)dimethoxysilane, diisobutyldimethoxysilane, dicyclopentyldimethoxysilane, cyclopentyl(methyl)dimethoxysilane, cyclohexyl(methyl)dimethoxysilane, dicyclohexyldimethoxysilane, isopropyl(tert-butyl)dimethoxysilane, isopropyl(sec-butyl)dimethoxysilane, isobutyl(sec-butyl)dimethoxysilane, bicyclo[2.2.1]heptan-2-yl dimethoxy-(methyl)silane, bicyclo[2.2.1]heptan-2-yl trimethoxysilane, and di(bicyclo[2.2.1]heptan-2-yl)dimethoxysilane.

12. A process for polymerizing propylene, the process comprising:
contacting, in a polymerization reactor, propylene, and optionally one or more comonomers with the phthalate-free Ziegler-Natta catalyst or pre-catalyst, as defined in any one of claims 9 to 11 or any one of claims 1 to 8, respectively; and
polymerizing propylene, optionally with the one or more comonomers.

13. The process of claim 12, further comprising:
prior to contacting, a step of selecting the pre-catalyst, wherein the selecting includes a step of varying a ratio, in the pre-catalyst, of the first internal electron donor (ID1) to the second internal electron donor (ID2) in order to identify an upper limit of XS content in a polymer formed for a pre-determined set of polymerization conditions involving the pre-catalyst.

14. The process of claim 13, further comprising:
using the selected pre-catalyst in a commercial plant for producing the full XS range without catalyst transition, wherein the produced polymers have a XS content ranging from 0.5 wt% to 10 wt%.
